# EUROPÄISCHE PATENTSCHRIFT

(11) **EP 3 170 384 B1**
(45) Veröffentlichungstag und Bekanntmachung des Hinweises auf die Patenterteilung: **08.01.2020**
(21) Anmeldenummer: 16198286.3
(22) Anmeldetag: 10.11.2016
(51) Int. Cl.: A01D 34/73

(54) **VORRICHTUNG ZUR UNTERSTÜTZUNG EINES MESSERWECHSELS AN MÄHWERKEN**
DEVICE FOR ASSISTING THE EXCHANGE OF BLADES ON MOWERS
DISPOSITIF D'ASSISTANCE AU CHANGEMENT DE LAMES SUR DES FAUCHEUSES

(30) Priorität: 19.11.2015 DE 102015120062
(43) Veröffentlichungstag der Anmeldung: 24.05.2017
(73) Patentinhaber: CLAAS Saulgau GmbH, 88348 Bad Saulgau (DE)
(72) Erfinder: Speer, Christian, 88348 Bad Saulgau (DE); Loebe, Stefan, 88348 Bad Saulgau (DE); Perrin, Carine, 72555 Metzingen (DE)

(56) Entgegenhaltungen:
- EP-A1- 3 081 064
- DE-A1- 19 856 746

## Beschreibung

Die Erfindung betrifft eine Vorrichtung zur Unterstützung eines Messerwechsels an Mähwerken nach dem Oberbegriff des Anspruchs 1.

Aus der DE 198 56 746 A1 ist ein Mähwerk bekannt, welches dem Mähen von Gras dient. Ein derartiges Mähwerk wird auch als Kreiselmäher bezeichnet. Mähwerke, die dem Mähen von Gras dienen, verfügen über mindestens einen Mähbalken, wobei an jedem Mähbalken mehrere Mähorgane gelagert sind. Jedes Mähorgan ist dabei an einem Mähbalkendeckel des jeweiligen Mähbalkens gelagert, wobei jedes Mähorgan einen Mähteller, einen Messerträger und mindestens ein Messer umfasst. Das oder jedes Messer des jeweiligen Mähorgans ist über einen Zapfen, der mit dem Messerträger verbunden ist und sich durch eine Ausnehmung im Mähteller erstreckt, am jeweiligen Messerträger des jeweiligen Mähorgans gelagert. Beim Messerträger handelt es sich dabei vorzugsweise um eine Blattfeder, wobei zum Wechseln des oder jedes Messers der Messerträger relativ zum Mähteller verlagert werden kann, um so den jeweiligen Zapfen aus der jeweiligen Ausnehmung im Mähteller herauszubewegen und so das jeweilige Messer vom jeweiligen Zapfen entfernen zu können. Die DE 198 56 746 A1 offenbart eine Vorrichtung zur Unterstützung eines Messerwechsels.

Nach der DE 198 56 746 A1 umfasst die Vorrichtung zur Unterstützung eines Messerwechsels an einem Mähorgan eines Mähwerks einen Halter sowie einen Quersteg, wobei der Quersteg zwischen den Messerträger und den Mähteller des jeweiligen Mähorgans einführbar ist. Der Halter der Vorrichtung zur Unterstützung des Messerwechsels stellt einen Hebelarm bereit, über welchen auf die Vorrichtung eine Handkraft manuell ausgeübt werden kann, um so unter Ausnutzung der Hebelwirkung über den zwischen den Messerträger und den Mähteller positionierten Quersteg der Vorrichtung zur Unterstützung eines Messerwechsels den Messerträger und den Mähteller relativ zueinander zu verlagern.

Durch diese Verlagerung des Messerträgers und des Mähtellers relativ zueinander sind dieselben spreizbar bzw. aufbiegbar, wobei hierbei der mit dem Messerträger verbundene Zapfen aus der Ausnehmung im Mähteller herausbewegbar ist. Der Quersteg der aus der DE 198 56 746 A1 bekannten Vorrichtung zur Unterstützung eines Messerwechsels an einem Mähorgan eines Mähwerks kann als Spreizeinrichtung oder Aufbiege-Einrichtung bezeichnet werden, die manuell unter Ausnutzung der Hebelwirkung durch Aufbringen einer Handkraft am Halter der Vorrichtung betätigt wird.

Mit der aus der DE 198 56 746 A1 bekannten Vorrichtung kann zwar in gewissem Umfang ein Messerwechsel an einem Mähorgan eines Mähwerks erleichtert werden, abhängig von der Länge des den Hebelarm bereitstellenden Halters ist jedoch nach wie vor das Aufbringen einer relativ großen Handkraft auf die Vorrichtung erforderlich, um den Messerträger und den Mähteller des jeweiligen Mähorgans zur Ausführung des Messerwechsels derart zu verlagern, dass der mit dem Messerträger verbundene Zapfen aus der Ausnehmung im Mähteller herausbewegt werden kann, um so letztendlich den Messerwechsel zu ermöglichen. Es besteht daher Bedarf an einer Vorrichtung zur Unterstützung eines Messerwechsels an einem Mähorgan eines Mähwerks, bei welcher das Aufbringen einer Handkraft zum Spreizen bzw. Aufbiegen von Messerträger und Mähteller überflüssig ist.

Das unter Artikel 54 (3) EPÜ fallende Dokument EP 3 081 064 A1 offenbart eine Hilfsvorrichtung zum Wechseln von Messern einer Mähmaschine mit einem zumindest zwei rotierende Mähscheiben aufweisenden Mähholm, wobei die Messer über einen Messerschnellverschluss mit der Mähscheibe verbunden sind, und die Hilfsvorrichtung dazu eingerichtet ist, einen Messerschnellverschluss nach dem Heranführen der Hilfsvorrichtung an eine Mähscheibe antriebsenergiebetätigt zum Aus- bzw. Einbau eines Messers zu öffnen und nach dem Aus- bzw. Einbau eines Messers wieder zu verschließen.

Hiervon ausgehend liegt der vorliegenden Erfindung die Aufgabe zugrunde, eine neuartige Vorrichtung zur Unterstützung eines Messerwechsels an Mähwerken zu schaffen.

Diese Aufgabe wird durch eine Vorrichtung zur Unterstützung eines Messerwechsels an Mähwerken nach Anspruch 1 gelöst. Die erfindungsgemäße Vorrichtung zur Unterstützung eines Messerwechsels ist elektrisch hilfskraftunterstützt ausgebildet.

Bedingt dadurch, dass die erfindungsgemäße Vorrichtung elektrisch hilfskraftunterstützt ausgebildet ist, ist es nicht länger erforderlich, zur Ausführung eines Messerwechsels an einem Mähorgan eines Mähwerks den Messerträger und den Mähteller des jeweiligen Mähorgans durch manuelles Aufbringen einer Handkraft zu verlagern bzw. zu spreizen.

Erfindungsgemäß ist die zwischen den Messerträger und den Mähteller des jeweiligen Mähorgans einführbare Aufbiege-Einrichtung elektrisch hilfskraftbetätigt. Dies erlaubt einen besonders vorteilhaften Messerwechsel an einem Mähorgan eines Mähwerks.

Die Vorrichtung weist einen Elektromotor und einen druckmittelbetätigten Zylinder auf, der die zumindest abschnittsweise zwischen den Messerträger und den Mähteller des jeweiligen Mähorgans einführbaren Aufbiege-Einrichtung betätigt, wobei der Elektromotor den druckmittelbetätigten Zylinder und der druckmittelbetätigte Zylinder die Aufbiege-Einrichtung betätigt. Vorzugsweise sind der Elektromotor und der druckmittelbetätigte Zylinder in einem Gehäuse aufgenommen, wobei die zwischen den Messerträger und den Mähteller des Mähorgans einführbare Aufbiege-Einrichtung mit dem Zylinder zusammenwirkt. Eine derartige Vorrichtung ist konstruktiv einfach und erlaubt einen vorteilhaften Messerwechsel an einem Mähorgan eines Mähwerks ohne die Notwendigkeit des Aufbringens einer Handkraft zum Spreizen bzw. Ausbiegen von Mähteller und Messerträger.

Erfindungsgemäß weist die zwischen den Messerträger und den Mähteller einführbare Aufbiege-Einrichtung relativ zueinander verlagerbare Elemente auf. Nach einer vorteilhaften Weiterbildung greift ein erstes Element der Aufbiege-Einrichtung an dem Gehäuse an, wobei ein zweites Element der Aufbiege-Einrichtung drehbar bzw. schwenkbar am ersten Element gelagert ist, und wobei die beiden Elemente der Aufbiege-Einrichtung über den druckmittelbetätigten Zylinder, der auf das zweite Element der Aufbiege-Einrichtung einwirkt, relativ zueinander drehbar bzw. schwenkbar sind. Vorzugsweise sind das erste Element und das zweite Element über ein Federelement gekoppelt, welches die beiden Elemente in eine erster Relativposition hält und entgegen dessen Federkraft der druckmittelbetätigte Zylinder die beiden Elemente aus ihrer ersten Relativposition heraus verlagert. Mit einer solchen Vorrichtung können der Messerträger und der Mähteller des jeweiligen Mähorgans zur Ausführung eines Messerwechsels besonders vorteilhaft zueinander verlagert werden.

Bevorzugte Weiterbildungen der Erfindung ergeben sich aus den Unteransprüchen und der Beschreibung. Ausführungsbeispiele der Erfindung werden, ohne hierauf beschränkt zu sein, an Hand der Zeichnung näher erläutert. Dabei zeigt:
- Fig. 1: einen ausschnittsweisen Querschnitt durch ein Mähorgan eines Mähwerks;
- Fig. 2: eine perspektivische Ansicht einer erfindungsgemäßen Vorrichtung zur Unterstützung eines Messerwechsels an einem Mähorgan eines Mähwerks;
- Fig. 3: eine Seitenansicht der Vorrichtung gemäß Fig. 2 in einem ersten Zustand derselben;
- Fig. 4: eine Seitenansicht der Vorrichtung gemäß Fig. 2 in einem zweiten Zustand derselben
- Fig. 5: ein ausschnittsweisen Querschnitt durch Fig. 3;
- Fig. 6: ein ausschnittsweisen Querschnitt durch Fig. 4;
- Fig. 7: eine perspektivische Ansicht einer abschnittsweise zwischen einen Messerträger und einen Mähteller des jeweiligen Mähorgans einführbaren Aufbiege-Einrichtung der Vorrichtung gemäß Fig. 1 in dem ersten Zustand derselben;
- Fig. 8: eine perspektivische Ansicht der Aufbiege-Einrichtung der Fig. 7 in dem zweiten Zustand derselben;
- Fig. 9: eine Seitenansicht der Aufbiege-Einrichtung gemäß Fig. 7;
- Fig. 10: eine Seitenansicht der Aufbiege-Einrichtung gemäß Fig. 8;
- Fig. 11: die erfindungsgemäße Vorrichtung in Kombination mit einem Mähwerk in einem ersten Zustand;
- Fig. 12: ein Detail der Fig. 11;
- Fig. 13: die erfindungsgemäße Vorrichtung in Kombination mit dem Mähwerk in einem zweitem Zustand; und
- Fig. 14: ein Detail der Fig. 13.

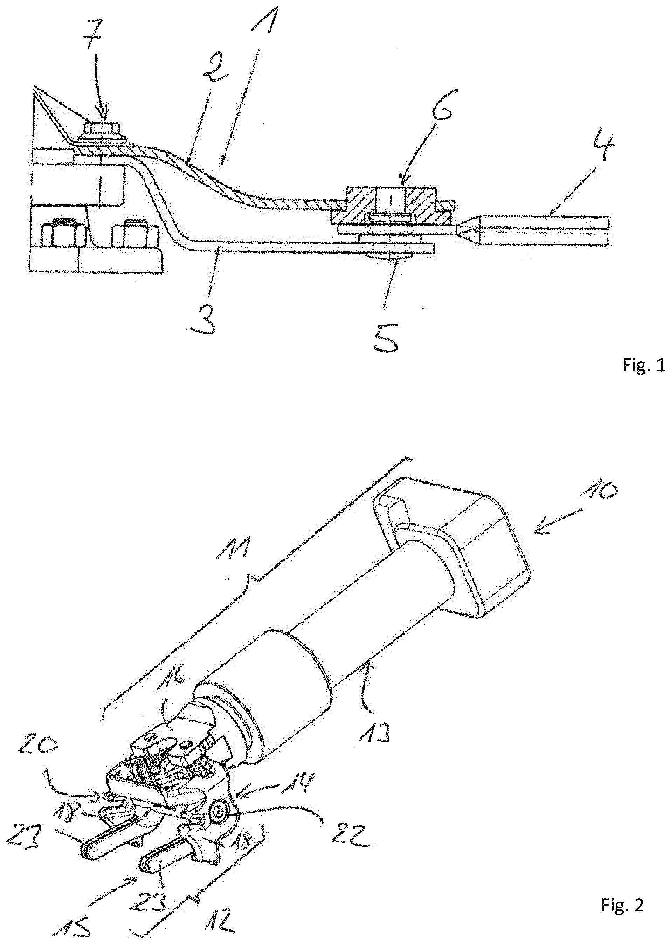

Fig. 1 zeigt einen Ausschnitt aus einem Mähwerk, insbesondere einem Kreiselmähwerk, welches dem Mähen von insbesondere Gras dient, im Bereich eines Mähorgans 1 des Mähwerks. Das Mähorgan 1 verfügt über einen Mähteller 2, einen Messerträger 3 sowie vorzugsweise über zwei Messer 4. Die Anzahl der Messer 4 ist rein exemplarischer Natur. Die Messer 4 sind am Messerträger 3 befestigt, und zwar über jeweils einen Zapfen 5, der mit dem Messerträger 3 fest verbunden ist und an dem das jeweilige Messer 4 aufgenommen ist. Der Zapfen 5 erstreckt sich durch eine Ausnehmung 6 im Mähteller 2. Zur Ausführung eines Messerwechsels kann der jeweilige Zapfen 5 durch Aufbiegen des Messerträgers 3 relativ zum Mähteller 2 aus der Ausnehmung 6 im Mähteller 2 herausbewegt werden, um dann zum Beispiel ein verschlissenes Messer 4 vom Zapfen 5 zu entfernen und gegen ein neues Messer auszutauschen. Gemäß Fig. 1 sind der Messerträger 3 und der Mähteller 2 des jeweiligen Mähorgans 1 miteinander über eine Schraubverbindung 7 verschraubt, wobei bei rotierendem Mähorgan 1 der Messerträger 3, die Messer 4 und der Mähteller 2 des Mähorgans 1 rotieren. Die Messer 4 werden dabei durch Fliehkräfte nach radial außen verlagert.

Wie oben ausgeführt, müssen zur Ausführung eines Messerwechsels an den in Fig. 1 gezeigten Mähorgan 1 Messerträger 3 und Mähteller 2 relativ zueinander aufgebogen bzw. gespreizt werden, um den das auszutauschende Messer 4 aufnehmenden Zapfen 5 aus der Ausnehmung 6 im Mähteller 2 herauszubewegen und so das auszutauschende Messer 4 für einen Messerwechsel zugänglich zu machen. Die hier vorliegende Erfindung schlägt eine Vorrichtung zur Unterstützung eines Messerwechsels an einem Mähwerk 1 vor, mit Hilfe derer dieses Aufbiegen bzw. Spreizen von Messerträger 3 und Mähteller 2 einfach und zuverlässig erfolgen kann, und zwar ohne die Notwendigkeit des manuellen Aufbringens einer Handkraft, wie dies bei aus dem Stand der Technik bekannten Vorrichtungen erforderlich ist.

Die erfindungsgemäße Vorrichtung zur Unterstützung eines Messerwechsels an einem Mähorgan 1 eines Mähwerks ist hilfskraftunterstützt ausgebildet. Durch die Hilfskraftunterstützung wird das Aufbringen einer Handkraft, wie dies bei aus dem Stand der Technik bekannten Vorrichtungen erforderlich ist, überflüssig. Hierdurch kann ein Messerwechsel an einem Mähorgan eines Mähwerks einfach durchgeführt werden.

Fig. 2 bis 4 zeigen unterschiedliche Ansichten eines bevorzugten Ausführungsbeispiels einer erfindungsgemäßen Vorrichtung 10 zur Unterstützung eines Messerwechsels an einem Mähorgan 1 eines Mähwerks, wobei die Vorrichtung 10 im Wesentlichen aus zwei Baugruppen 11, 12 zusammengesetzt ist, wobei eine erste Baugruppe 11 einem im Detail nicht gezeigten Elektromotor, einen im Detail nicht gezeigten druckmittelbetätigten Zylinder und einen im Detail nicht gezeigten Energiespeicher umfasst, die in einem Gehäuse 13 aufgenommen sind. Mit dieser ersten Baugruppe 11 ist eine zweite Baugruppe 12 gekoppelt, bei welcher es sich um eine Aufbiege-Einrichtung handelt. Die Aufbiege-Einrichtung 12 dient bei Ausführung eines Messerwechsels dem hilfskraftunterstützten Aufbiegen bzw. Spreizen von Messerträger 3 und Mähteller 2 des Mähorgans 1, wobei diese Aufbiege-Einrichtung 12 hilfskraftbetätigt ist.

Wie bereits ausgeführt, umfasst die erste Baugruppe 11 vorzugsweise den Elektromotor und den druckmittelbetätigten Zylinder. Der Elektromotor betätigt den druckmittelbetätigten Zylinder und der druckmittelbetätigte Zylinder betätigt die Aufbiege-Einrichtung 12, die abschnittsweise zwischen den Messerträger 3 und den Mähteller 2 des Mähorgans 1, an dem ein Messerwechsel auszuführen ist, einführbar ist.

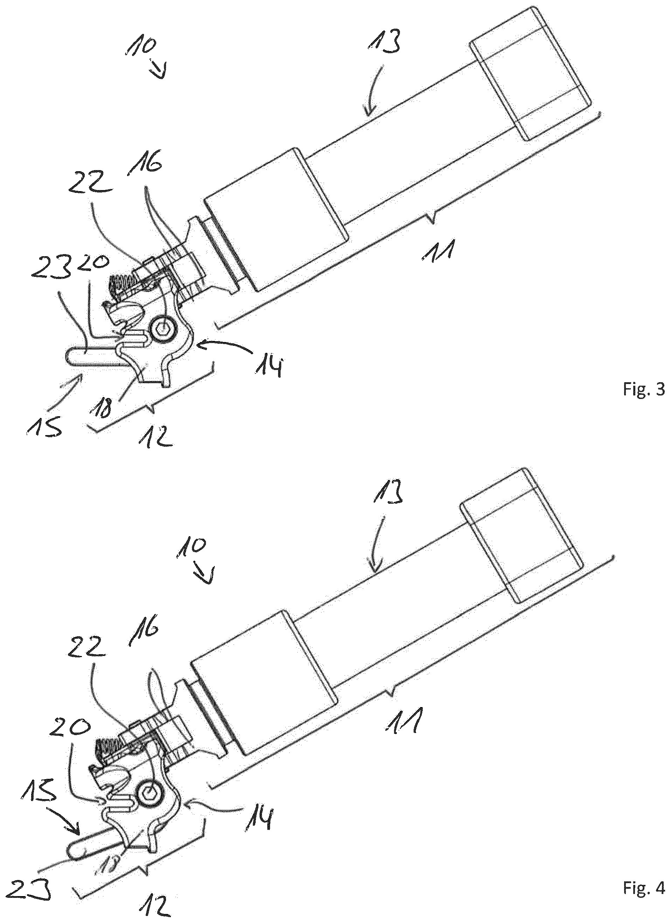

Die Aufbiege-Einrichtung 12 umfasst relativ zueinander verlagerbare Elemente 14, 15. Ein erstes Element 14 der Aufbiege-Einrichtung 12 greift an dem Gehäuse 13 der Baugruppe 11 an, die den Elektromotor und den druckmittelbetätigten Zylinder sowie den elektrischen Energiespeicher umfasst. So zeigt Fig. 3, 4 Befestigungsflansche 16 des Gehäuses 13 der Baugruppe 11, an welchen die Aufbiege-Einrichtung 12 über das erste Element 14 befestigt ist.

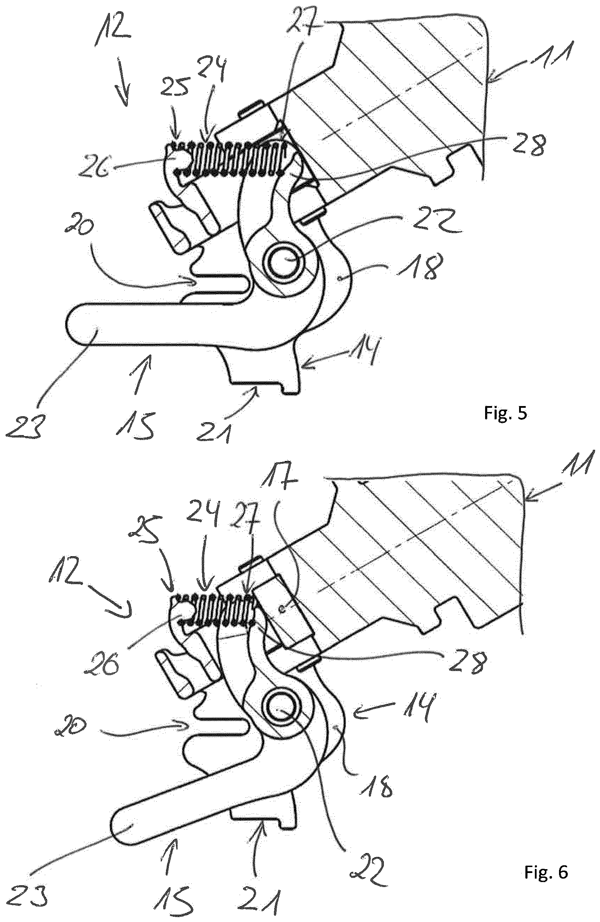

Ein zweites Element 15 der Aufbiege-Einrichtung 12 ist drehbar bzw. schwenkbar am ersten Element 14 gelagert und wirkt mit einem Betätigungskolben des druckmittelbetätigten Zylinders zusammen. Dieser Betätigungskolben des druckmittelbetätigten Zylinders ist in Fig. 6 sichtbar und mit der Bezugsziffer 17 versehen.

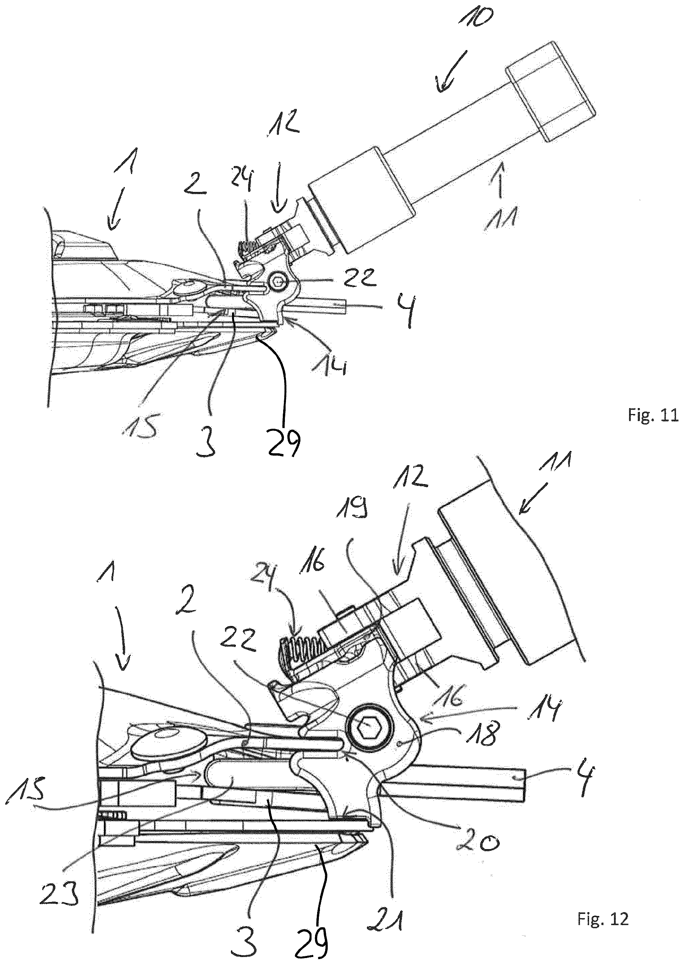

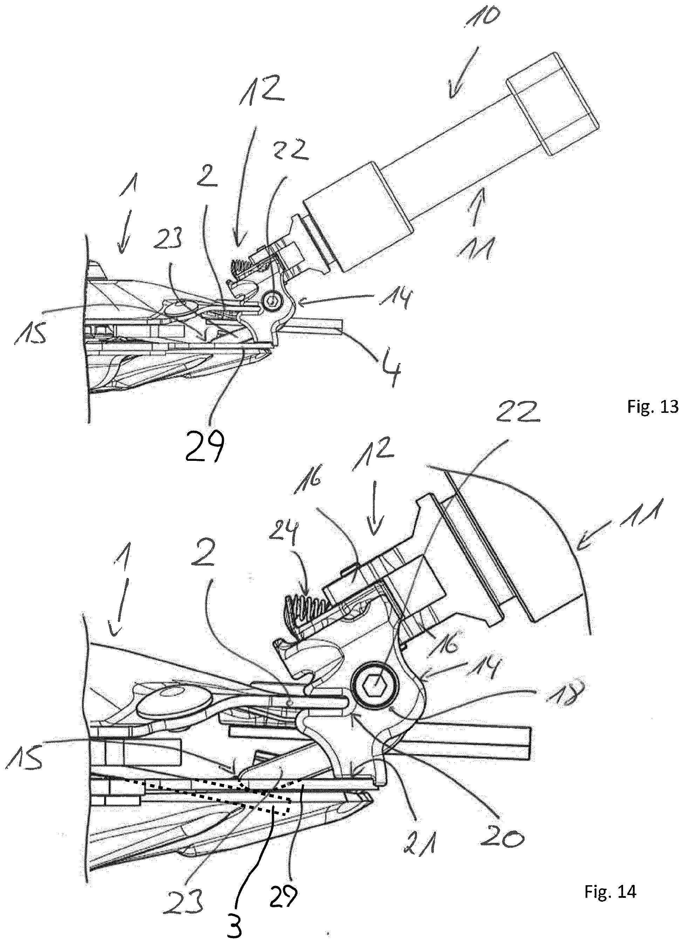

Das erste Element 14 der Aufbiege-Einrichtung 12, welches mit den Flanschen 16 des Gehäuses 13 der Baugruppe 11 der erfindungsgemäßen Vorrichtung 10 fest verbunden ist, verfügt über eine im Wesentlichen U-förmige Gestalt mit zwei seitlichen Backen 18, die über eine sich zwischen den Backen 18 erstreckende Traverse 19 verbunden sind. Dann, wenn die Aufbiege-Einrichtung 12 an der Baugruppe 11 montiert ist, ist die Traverse 19 des ersten Elements 14 zwischen die Flansche 16 des Gehäuses 13 abschnittsweise eingeschoben, wobei sich dann durch die Befestigungsflansche 16 und die Traverse 19 Befestigungsschrauben erstrecken. Die seitlichen Backen 18 des ersten Elements 14 der Aufbiege-Einrichtung 12 verfügen über Schlitze 20, in welche, wie am besten Fig. 12 und 14 entnommen werden kann, der Mähteller 2 eines Mähorgans 1, an dem ein Messerwechsel ausgeführt werden soll, abschnittsweise eingeführt werden kann. Mit einem der Traverse 19 gegenüberliegenden Abschnitt 21 stützen sich die Backen 18 des ersten Elements 14 der Aufbiege-Einrichtung 12 am Messerträger 3 ab, nämlich dann, wenn der Mähteller 2 abschnittsweise in die Schlitze 20 der Backen 18 des ersten Elements 14 der Aufbiege-Einrichtung 12 eingeführt ist.

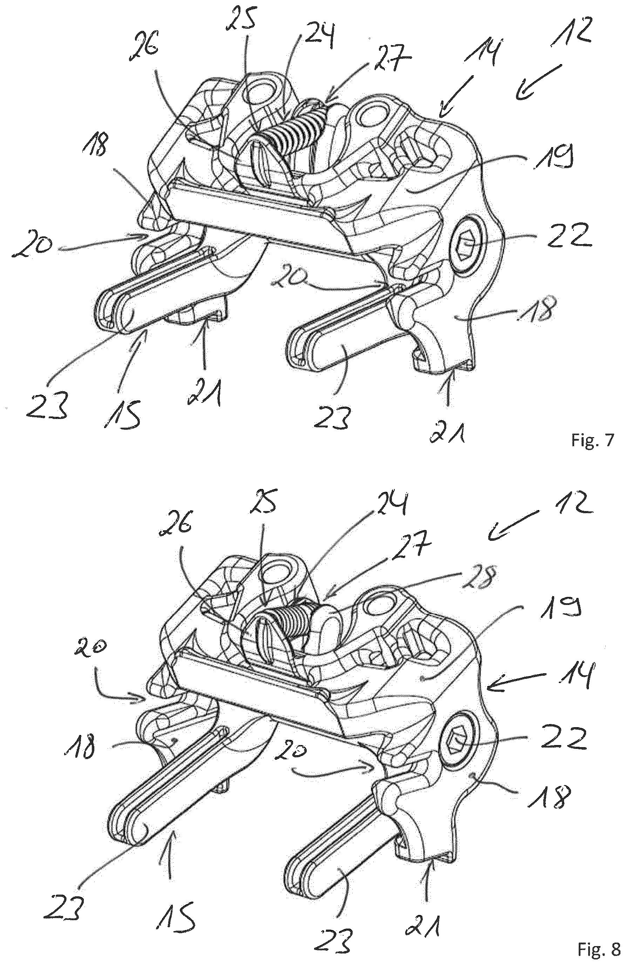

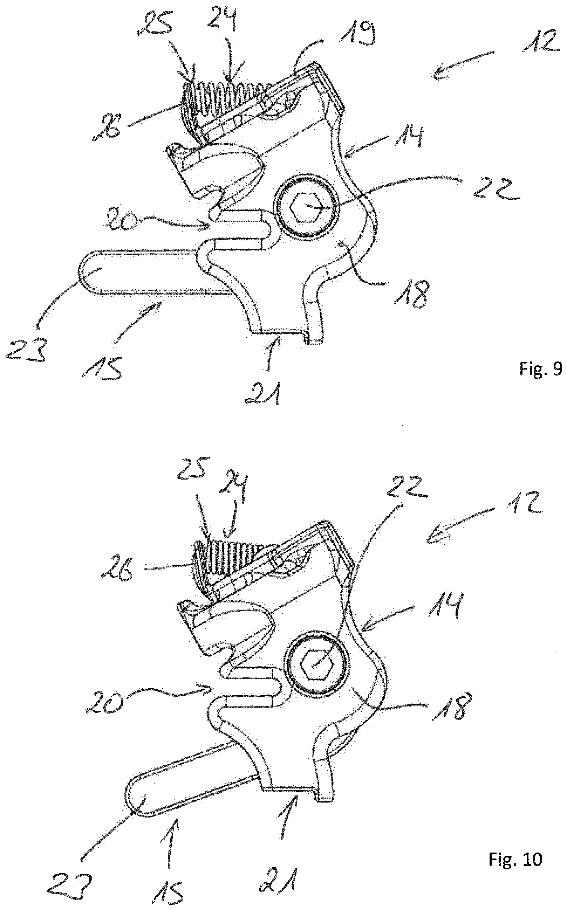

Das zweite Element 15 der Aufbiege-Einrichtung 12, welches um eine Drehachse 22 drehbar bzw. schwenkbar am ersten Element 14 der Aufbiege-Einrichtung 12 gelagert ist und an welchem der Betätigungskolben 17 des druckmittelbetätigten Zylinders angreift, verfügt über Vorsprünge 23, die zwischen den Messerträger 3 und den Mähteller 2 des jeweiligen Mähorgans 1 bei Ausführung eines Messerwechsels einführbar sind, wobei sich diese Vorsprünge 23 des zweiten Elements 15 am Messerträger 3 abstützen, und den Messerträger 3 relativ zum Mähteller 2 aufbiegen bzw. wegspreizen, und zwar dann, wenn über den Betätigungskolben 17 des druckmittelbetätigten Zylinders auf das zweite Element 15 der Aufbiege-Einrichtung 12 eine Betätigungskraft aufgebracht wird, um denselben ausgehend von der Position der Fig. 3, 5, 7, 9, 11 und 12 in die Position der Fig. 4, 6, 8, 10, 13 und 14 zu verlagern.

Bei Überführen der Aufbiege-Einrichtung 12 von der in Fig. 3, 5, 7, 9, 11 und 12 gezeigten Relativposition der Elemente 14, 15 in die in Fig. 4, 6, 8, 10, 13 und 14 gezeigte Relativposition der Elemente 14 und 15 wird demnach das zweite Element 15 der Aufbiege-Einrichtung 12 relativ zum ersten Element 14 derselben um die Drehachse 22 gedreht bzw. geschwenkt, wobei hierbei die am Messerträger 3 zur Anlage kommenden Vorsprünge 23 des zweiten Elements 15 den Messerträger 3 relativ zum Mähteller 2 wegdrücken bzw. nach unten drücken, sodass dann der Zapfen 5 des Messerträgers 3 aus der Ausnehmung 6 im Mähteller 2 herausbewegt wird und das Messer 4, welches am Zapfen 5 gelagert ist, für einen Messerwechsel zugänglich ist.

Der Betätigungskolben 17 des druckmittelbetätigten Zylinders übt seine Kraft auf einen Abschnitt 28 des zweiten Elements 15 der Aufbiege-Einrichtung 12 aus, der bezogen auf die Drehachse 22 den Vorsprüngen 23 des zweiten Elements 15 der Aufbiege-Einrichtung 12 gegenüberliegt.

Wie am besten Fig. 5 bis 10 entnommen werden kann, werden die beiden Elemente 14, 15 der Aufbiege-Einrichtung 12 in die in Fig. 5, 7 und 9 gezeigte erste Relativposition über ein Federelement 24 gedrückt, welches sich an den beiden Elementen 14, 15 der Aufbiege-Einrichtung 12 abstützt.

So zeigen insbesondere Fig. 5 und 6, dass sich dieses Federelement 24 mit einem ersten Ende 25 an einem Abschnitt 26 des ersten Elements 14 der Aufbiege-Einrichtung 12 und mit einem zweiten Ende 27 an dem Abschnitt 28 des zweiten Elements 15 der Aufbiege-Einrichtung 12 abstützt. Die Federkraft dieses Federelements 24 drückt die beiden Elemente 14, 15 der Aufbiege-Einrichtung 12 in die in Fig. 5, 7 und 9 gezeigte erste Relativposition. Wird über den Betätigungskolben 17 des druckmittelbetätigten Zylinders auf den Abschnitt 28 des zweiten Elements 15 der Aufbiege-Einrichtung 12 eine Betätigungskraft aufgebracht, so wird das zweite Element 15 relativ zum ersten Element 14 der Aufbiege-Einrichtung 12 in die in Fig. 6, 8 und 10 gezeigte zweite Relativposition verlagert, und zwar entgegen der Federkraft des Federelements 24. Hierbei werden Messerträger 3 und Mähteller 2 des Mähorgans relativ zueinander aufgeboben.

Die erfindungsgemäße Vorrichtung zur Unterstützung eines Messerwechsels an einem Mähorgan 1 eines Mähwerks verfügt demnach über die Aufbiege-Einrichtung 12, die mit den Vorsprüngen 23 des zweiten Elements 15 derselben zwischen einen Mähteller 2 und einen Messerträger 3 eines Mähorgans 1 zur Ausführung eines Messerwechsels einführbar ist. Zum Einführen einer Aufbiege-Einrichtung 12 zwischen den Messerträger 3 und den Mähteller 2 nimmt dieselbe den in Fig. 3, 5, 7, 9, 11 und 12 gezeigten Zustand mit der ersten Relativposition zwischen den beiden Elementen 14, 15 der Aufbiege-Einrichtung 12 ein. Beim Einführen der Aufbiege-Einrichtung 12 mit den Vorsprüngen 23 des zweiten Elements 15 der Aufbiege-Einrichtung 12 zwischen Mähteller 2 und Messerträger 3 wird der Mähteller 2 mit Abschnitten in die Schlitze 20 der Backen 18 des ersten Elements 14 der Aufbiege-Einrichtung 12 eingeführt, wobei sich dieses erste Element 14 der Aufbiege-Einrichtung 12 mit den Abschnitten 21 an der Getriebewanne 29 des Mähbalkens abstützen kann. Soll ein Messerwechsel ausgeführt werden, so wird hilfskraftunterstützt bzw. hilfskraftbetätigt die Aufbiege-Einrichtung 12 von der in Fig. 3, 5, 7, 9, 11 und 12 gezeigten Zustand in den in Fig. 4, 6, 8, 10, 13 und 14 gezeigten Zustand überführt, indem über den Betätigungskolben 17 des druckmittelbetätigten Zylinders das zweite Element 15 der Aufbiege-Einrichtung 12 relativ zum ersten Element 14 desselben um die Drehachse 22 verdreht bzw. verschwenkt wird und hierbei die Vorsprünge 23 des zweiten Elements 15 der Aufbiege-Einrichtung 12 den Messerträger 3 relativ zum Mähteller 2 aufbiegen. Dies erfolgt entgegen der Federkraft des Federelements 24.

Bei der hilfskraftunterstützten Vorrichtung 10 zur Unterstützung eines Messerwechsels wird im Energiespeicher gespeicherte elektrische Energie über den Elektromotor in Energie zur Verlagerung des Betätigungskolbens 17 des druckmittelbetätigten, vorzugsweise hydraulisch betätigten Zylinders gewandelt, wobei darauffolgend diese hydraulische Energie in mechanische Energie zum Aufbiegen bzw. Spreizen von Messerträger 3 und Mähteller 2 gewandelt wird. Es muss keine Handkraft aufgebracht werden, um dieses Aufbiegen bzw. Spreizen von Mähteller 2 und Messerträger 3 zur Ausführung eines Messerwechsels am Mähorgan 1 vorzunehmen.

### Bezugszeichenliste

- 1: Mähorgan
- 2: Mähteller
- 3: Messerträger
- 4: Messer
- 5: Zapfen
- 6: Ausnehmung
- 7: Schraubverbindung
- 10: Vorrichtung
- 11: Baugruppe
- 12: Baugruppe / Aufbiege-Einrichtung
- 13: Gehäuse
- 14: Element
- 15: Element
- 16: Flansch
- 17: Betätigungskolben
- 18: Backe
- 19: Traverse
- 20: Schlitz
- 21: Abschnitt
- 22: Drehachse
- 23: Vorsprung
- 24: Federelement
- 25: Ende
- 26: Abschnitt
- 27: Ende
- 28: Abschnitt
- 29: Getriebewanne

## Patentansprüche

1. Vorrichtung (10) zur Unterstützung eines Messerwechsels an einem Mähorgan (1) eines Mähwerks, wobei das jeweilige Mähorgan (1) einen Mähteller (2), einen Messerträger (3) und mindestens ein Messer (4) umfasst, welches über einen Zapfen (5), der mit dem Messerträger (3) verbunden ist und sich durch eine Ausnehmung (6) im Mähteller (2) erstreckt, am Messerträger (3) gelagert ist, mit einer zumindest abschnittsweise zwischen den Messerträger (3) und den Mähteller (2) des Mähorgans (1) einführbaren Aufbiege-Einrichtung (12), über die der Messerträger (3) und der Mähteller (2) des jeweiligen Mähorgans (1) derart relativ zueinander verlagerbar sind, dass zur Ausführung des Messerwechsels der mit dem Messerträger (3) verbundene Zapfen (5) aus der Ausnehmung (6) im Mähteller (2) herausbewegbar ist, **dadurch gekennzeichnet, dass** die Vorrichtung (10) elektrisch hilfskraftunterstützt ausgebildet ist, wobei die Vorrichtung (10) einen Elektromotor und einen druckmittelbetätigten Zylinder aufweist, der die Aufbiege-Einrichtung (12), welche relativ zueinander verlagerbare Elemente (14, 15) aufweist, betätigt, wobei der Elektromotor den druckmittelbetätigten Zylinder und der druckmittelbetätigte Zylinder die Aufbiege-Einrichtung (12) betätigt.

2. Vorrichtung nach Anspruch 1, **dadurch gekennzeichnet, dass** der Elektromotor und der druckmittelbetätigte Zylinder in einem Gehäuse (13) aufgenommen sind.

3. Vorrichtung nach Anspruch 1 und 2, **dadurch gekennzeichnet, dass** ein erstes Element (14) der Aufbiege-Einrichtung (12) an dem Gehäuse (13) angreift, dass ein zweites Element (15) der Aufbiege-Einrichtung (12) drehbar bzw. schwenkbar am ersten Element (14) gelagert ist, und dass die beiden Elemente (14,15) der Aufbiege-Einrichtung (12) über den druckmittelbetätigten Zylinder, der auf das zweite Element (15) der Aufbiege-Einrichtung (12) einwirkt, relativ zueinander drehbar bzw. schwenkbar sind.

4. Vorrichtung nach Anspruch 2 oder 3, **dadurch gekennzeichnet, dass** ein erstes Element (14) der Aufbiege-Einrichtung (12) Backen (18) mit Schlitzen (20) zur Aufnahme von Abschnitten des Mähtellers (2) oder alternativ des Messerträgers (3) aufweist, und dass ein zweites Element (15) der Aufbiege-Einrichtung (12) Vorsprünge (23) zur Abstützung auf dem Messerträger (3) oder alternativ dem Mähteller (2) aufweist, wobei durch Verlagerung der beiden Elemente (14, 15) relativ zueinander mit Hilfe des druckmittelbetätigten Zylinders der Messerträger (3) und der Mähteller (2) des Mähorgans (1) relativ zueinander aufbiegbar sind.

5. Vorrichtung nach Anspruch 4, **dadurch gekennzeichnet, dass** die Backen (18) des ersten Elements (14) zusätzlich zu den der Aufnahme von Abschnitten des Mähtellers (2) oder alternativ des Messerträgers (3) dienenden Schlitzen (20) Abschnitte (21) zur Abstützung auf dem Messerträger (3) oder alternativ dem Mähteller (2) aufweisen.

6. Vorrichtung nach einem der Ansprüche 3 bis 5, **dadurch gekennzeichnet, dass** das erste Element (14) der Aufbiege-Einrichtung (12) und das zweite Element (15) der Aufbiege-Einrichtung (12) über ein Federelement (24) gekoppelt sind, welches die beiden Elemente (14, 15) in einer ersten Relativposition hält und entgegen dessen Federkraft der druckmittelbetätigte Zylinder die beiden Elemente (14, 15) der Aufbiege-Einrichtung (12) aus ihrer ersten Relativposition heraus verlagert.

## Claims

1. Apparatus (10) for assisting in a blade change on a mowing member (1) of a mower, wherein the respective mowing member (1) includes a mowing disc (2), a blade carrier (3) and at least one blade (4) which is mounted to the blade carrier (3) by way of a pin (5) which is connected to the blade carrier (3) and extends through an opening (6) in the mowing disc (2), with a bending-open device (12) which can be introduced at least portion-wise between the blade carrier (3) and the mowing disc (2) of the mowing member (1) and by way of which the blade carrier (3) and the mowing disc (2) of the respective mowing member (1) are displaceable relative to each other in such a way that to carry out the blade change the pin (5) connected to the blade carrier (3) is moveable out of the opening (6) in the mowing disc (2), **characterised in that** the apparatus (10) is designed to electrically provide an auxiliary assistance force, wherein the apparatus (10) has an electric motor and a pressure fluid-actuated cylinder which actuates the bending-open device (12) which has elements (14, 15) displaceable relative to each other, wherein the electric motor actuates the pressure fluid-actuated cylinder and the pressure fluid-actuated cylinder actuates the bending-open device (12).

2. Apparatus according to claim 1 **characterised in that** the electric motor and the pressure fluid-actuated cylinder are received in a housing (13).

3. Apparatus according to claim 1 and claim 2 **characterised in that** a first element (14) of the bending-open device (12) engages the housing (13), a second element (15) of the bending-open device (12) is mounted rotatably or pivotably to the first element (14) and the two elements (14, 15) of the bending-open device (12) are pivotable or rotatable relative to each other by way of the pressure fluid-actuated cylinder which acts on the second element (15) of the bending-open device (12).

4. Apparatus according to claim 2 or claim 3 **characterised in that** a first element (14) of the bending-open device (12) has jaws (18) with slots (20) for receiving portions of the mowing disc (2) or alternatively of the blade carrier (3) and a second element (15) of the bending-open device (12) has projections (23) for support on the blade carrier (3) or alternatively the mowing disc (2), wherein the blade carrier (3) and the mowing disc (2) of the mowing member (1) can be bent open relative to each other by displacement of the two elements (14, 15) relative to each other by means of the pressure fluid-actuated cylinder.

5. Apparatus according to claim 4 **characterised in that** the jaws (18) of the first element (14) in addition to the slots (20) serving to receive portions of the mowing disc (2) or alternatively the blade carrier (3) have portions (21) for support on the blade carrier (3) or alternatively the mowing disc (2).

6. Apparatus according to one of claims 3 to 5 **characterised in that** the first element (14) of the bending-open device (12) and the second element (15) of the bending-open device (12) are coupled by way of a spring element (24) which holds the two elements (14, 15) in a first relative position and against the spring force of which the pressure fluid-actuated cylinder displaces the two elements (14, 15) of the bending-open device (12) out of their first relative position.

## Revendications

1. Dispositif (10) pour assister un changement de couteau sur un organe de fauchage (1) d'une tête de fauchage, l'organe de fauchage respectif (1) comprenant un disque de fauche (2), un porte-couteau (3) et au moins un couteau (4), lequel est monté sur le porte-couteau (3) par l'intermédiaire d'un tourillon (5) qui est relié au porte-couteau (3) et qui s'étend à travers un évidement (6) ménagé dans le disque de fauche (2), comprenant un équipement d'écartement (12) qui est insérable au moins par endroits entre le porte-couteau (3) et le disque de fauche (2) de l'organe de fauchage (1) et par l'intermédiaire duquel le porte-couteau (3) et le disque de fauche (2) de l'organe de fauchage respectif (1) sont déplaçables l'un par rapport à l'autre, de façon que, pour effectuer le changement de couteau, le tourillon (5) relié au porte-couteau (3) puisse être sorti de l'évidement (6) ménagé dans le disque de fauche (2), **caractérisé en ce que** le dispositif (10) est conçu avec une assistance électrique, le dispositif (10) comportant un moteur électrique et un vérin actionné par un fluide sous pression qui actionne l'équipement d'écartement (12), lequel comporte des éléments déplaçables l'un par rapport à l'autre (14, 15), le moteur électrique actionnant le vérin actionné par un fluide sous pression, et le vérin actionné par un fluide sous pression actionnant l'équipement d'écartement (12).

2. Dispositif selon la revendication 1, **caractérisé en ce que** le moteur électrique et le vérin actionné par un fluide sous pression sont logés dans un carter (13).

3. Dispositif selon la revendication 1 et 2, **caractérisé en ce qu'**un premier élément (14) de l'équipement d'écartement (12) agit sur le carter (13), **en ce qu'**un second élément (15) de l'équipement d'écartement (12) est monté tournant, respectivement pivotant sur le premier élément (14), et **en ce que** les deux éléments (14, 15) de l'équipement d'écartement (12) sont tournants, respectivement pivotants, par l'intermédiaire du vérin actionné par un fluide sous pression, lequel agit sur le second élément (15) de l'équipement d'écartement (12).

4. Dispositif selon la revendication 2 ou 3, **caractérisé en ce qu'**un premier élément (14) de l'équipement d'écartement (12) comporte des mâchoires (18) pourvues de fentes (20) pour recevoir des portions du disque de fauche (2) ou, alternativement, du porte-couteau (3), et **en ce qu'**un second élément (15) de l'équipement d'écartement (12) comporte des rebords (23) destinés à prendre appui sur le porte-couteau (3) ou, alternativement, sur le disque de fauche (2), le porte-couteau (3) et le disque de fauche (2) de l'organe de fauchage (1) pouvant être écartés l'un par rapport à l'autre par déplacement des deux éléments (14, 15) l'un par rapport à l'autre à l'aide du vérin actionné par un fluide sous pression.

5. Dispositif selon la revendication 4, **caractérisé en ce que**, en plus des fentes (20) servant à recevoir des portions du disque de fauche (2) ou, alternativement, du porte-couteau (3), les mâchoires (18) du premier élément (14) comportent des portions (21) destinées à prendre appui sur le porte-couteau (3) ou, alternativement, sur le disque de fauche (2).

6. Dispositif selon une des revendications 3 à 5, **caractérisé en ce que** le premier élément (14) de l'équipement d'écartement (12) et le second élément (15) de l'équipement d'écartement (12) sont couplés par l'intermédiaire d'un élément élastique (24) qui maintient les deux éléments (14, 15) dans une première position relative et, à l'encontre de la force élastique de celui-ci, le vérin actionné par un fluide sous pression éloigne les deux éléments (14, 15) de l'équipement d'écartement (12) de leur première position relative.
